# EUROPEAN PATENT SPECIFICATION

(11) **EP 3 960 621 B1**
(45) Date of publication and mention of the grant of the patent: **17.06.2026**
(21) Application number: 21191155.7
(22) Date of filing: 12.08.2021
(51) Int. Cl.: B64C 11/46, B64C 39/10, B64D 27/24, B64D 27/33, B64D 27/02

(54) **AIRCRAFT EQUIPPED WITH A DISTRIBUTED COUNTERROTATING UNDUCTED FAN PROPULSION SYSTEM**
FLUGZEUG MIT VERTEILTER GEGENLÄUFIGER DIFFUSER GEBLÄSEANTRIEBSANLAGE
AÉRONEF ÉQUIPÉ D'UN SYSTÈME DE PROPULSION À SOUFFLANTE NON CARÉNÉE À CONTRE-ROTATION RÉPARTI

(30) Priority: 31.08.2020 US 202017007503
(43) Date of publication of application: 02.03.2022
(73) Proprietor: General Electric Company, Evendale, OH 45215 (US)
(72) Inventor: FREELY, Brendan, Cincinnati, 45215 (US); MURROW, Kurt, Cincinnati, 45215 (US); McMAHON, Michael, Cincinnati, 45215 (US); BREEZE-STRINGFELLOW, Andrew, Cincinnati, 45249 (US)
(74) Representative: Openshaw & Co.

(56) References cited:
- US-A1- 2016 355 272
- US-A1- 2019 337 614
- US-A1- 2020 017 213
- US-B2- 8 640 985
- ANONYMOUS: "Messerschmitt Me 323 Gigant - Wikipedia", 7 July 2020 (2020-07-07), pages 1 - 8, XP055874030, Retrieved from the Internet <URL:https://en.wikipedia.org/w/index.php?title=Messerschmitt_Me_323_Gigant&oldid=966720095> [retrieved on 20211217]

## Description

### FIELD

The present subject matter relates generally to aircraft having unducted fan propulsion systems.

### BACKGROUND

An aircraft can experience a lateral airflow migration spanwise along its wings during flight. In a lateral airflow migration, generally, air circulates laterally outward toward the wing tips along the underside of the wings and laterally inward toward the wing roots or lateral center of the aircraft along the topside of the wings. Such a lateral airflow migration can apply drag on the aircraft, which is undesirable. Solutions to counter or reduce the effects of lateral airflow migrations have included adding airfoil components at the wing tips or at other places along the wings. While airfoils can be effective, they add mass and complexity to the wing design.

Accordingly, aircraft and methods of operating an aircraft that provide control over lateral airflow migration would be useful.

The reader is referred to Anonymous: "Messerschmitt Me 323 Gigant - Wikipedia", which relates to the Messerschmitt Me 323 Gigant aircraft. The reader is also referred to US 2019/337614 A1, which relates to a vertical takeoff and landing aircraft, and to US 2016/355272 A1, which relates to an aircraft propulsion system. The reader is also referred to US 8640985 B2, which discloses co-rotating stacked rotor disks for improved hover performance.

### BRIEF DESCRIPTION

Aspects of the present disclosure are directed to distributed control systems and methods of controlling turbomachines. Aspects and advantages of the invention will be set forth in part in the following description, or may be obvious from the description, or may be learned through practice of the invention.

In one aspect, an aircraft as claimed in claim 1 is provided.

In a further aspect, a method as claimed in claim 8 is provided.

These and other features, aspects and advantages of the present invention will become better understood with reference to the following description and appended claims. The accompanying drawings, which are incorporated in and constitute a part of this specification, illustrate embodiments of the invention and, together with the description, serve to explain the principles of the invention.

### BRIEF DESCRIPTION OF THE DRAWINGS

A full and enabling disclosure of the present invention, including the best mode thereof, directed to one of ordinary skill in the art, is set forth in the specification, which makes reference to the appended figures, in which:
FIG. 1 provides a front view of an aircraft equipped with a distributed unducted fan propulsion system according to an example embodiment of the present disclosure and depicts unducted fans of the distributed unducted fan propulsion system rotating according to an example counterrotation scheme not according to the claims;
FIG. 2 provides a schematic top plan view of the aircraft of FIG. 1;
FIG. 3 provides a schematic top plan view of an aircraft equipped with a distributed unducted fan propulsion system according to another example embodiment of the present disclosure;
FIG. 4 provides a front view of the aircraft of FIG. 1 depicting unducted fans of the distributed unducted fan propulsion system rotating according to another counterrotation scheme;
FIG. 5 provides a schematic top plan view of a blended wing aircraft equipped with a distributed unducted fan propulsion system according to yet another example embodiment of the present disclosure;
FIG. 6 provides a schematic top plan view of a flying wing aircraft equipped with a distributed unducted fan propulsion system according to yet another example embodiment of the present disclosure; and
FIG. 7 provides a flow diagram of an example method of operating an aircraft according to example aspects of the present disclosure.

### DETAILED DESCRIPTION

Reference will now be made in detail to present embodiments of the invention, one or more examples of which are illustrated in the accompanying drawings. The detailed description uses numerical and letter designations to refer to features in the drawings. Like or similar designations in the drawings and description have been used to refer to like or similar parts of the invention. As used herein, the terms "first", "second", and "third" may be used interchangeably to distinguish one component from another and are not intended to signify location or importance of the individual components. The terms "upstream" and "downstream" refer to the relative flow direction with respect to fluid flow in a fluid pathway. For example, "upstream" refers to the flow direction from which the fluid flows, and "downstream" refers to the flow direction to which the fluid flows.

Aspects of the present disclosure are directed to aircraft having fan propulsion systems. In one aspect, an aircraft includes one or more fans mounted to one side of the aircraft and one or more fans mounted to the other side of the aircraft. The fans are mounted to respective wings or laterally extending portions of the body of the aircraft. The fans are unducted fans. Stated differently, the fan blades of the fans are not circumferentially surrounded by an outer structure, such as a fan casing or outer nacelle. Not according to the claims, the fans are partially ducted fans. That is, a fan casing or outer nacelle partially circumferentially surrounds the fan blades of the fans. Not according to the claims, the fans can be fully ducted fans. Stated another way, the fans can be circumferentially surrounded by a fan casing or outer nacelle. Not according to the claims, the fans can be some combination of unducted, partially ducted, and/or fully ducted fans.

To provide improved control over lateral airflow migrations over the wings or laterally extending portions of the body of the aircraft, the fans are configured to be rotated in a counterrotation scheme in which the fans on opposite sides of the aircraft counterrotate. That is, all of the fans on one side of the aircraft rotate in a first direction and all of the fans on the other side of the aircraft rotate in a second direction that is opposite the first direction. Not according to claims, the first direction can be a counterclockwise direction as viewed from a front view of the aircraft and the second direction can be a clockwise direction as viewed from the front view of the aircraft. According to the claims, the first direction is a clockwise direction as viewed from a front view of the aircraft and the second direction is a counterclockwise direction as viewed from the front view of the aircraft. The fans can be electrically-driven fans, for example. Such a counterrotation scheme can provide a number of advantages and benefits, such as improved control over the lateral airflow migration, which results in less drag. Moreover, conventional components that address lateral airflow migration can be removed or used to a lesser extent, among other benefits and advantages. A method of operating an aircraft having an unducted fan propulsion system is also provided.

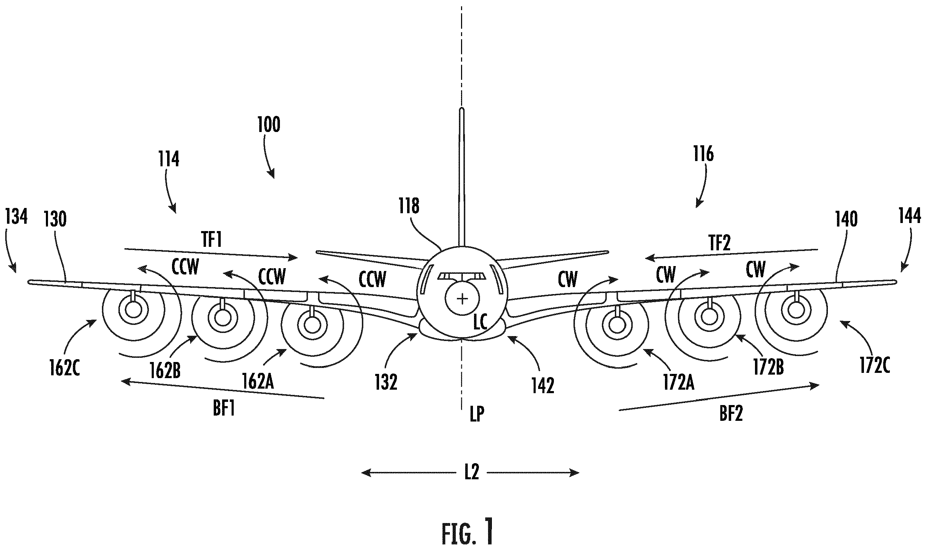

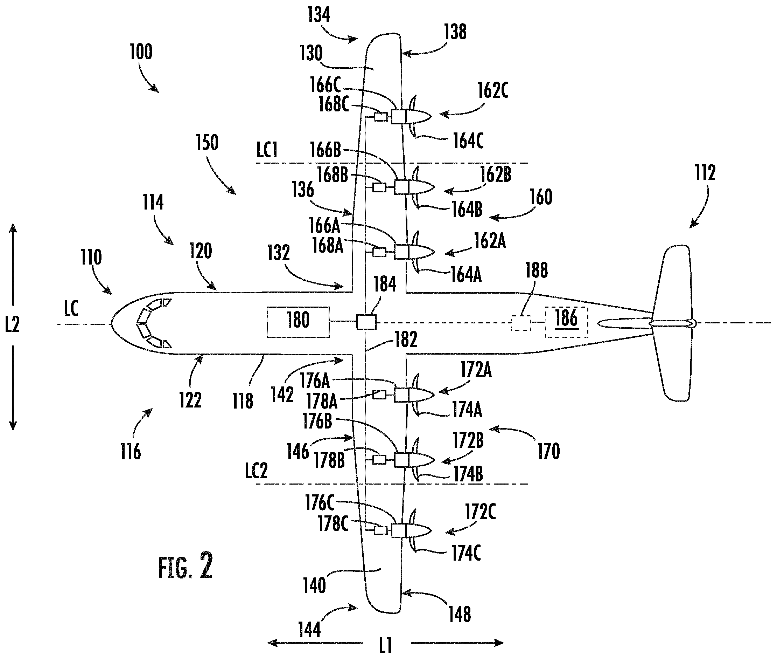

With reference now to FIGS. 1 and 2, FIG. 1 provides a front view of an aircraft 100 equipped with a distributed unducted fan propulsion system 150 according to an example embodiment of the present disclosure. FIG. 2 provides a schematic top plan view of the aircraft 100. As shown, for this embodiment, the aircraft 100 of FIGS. 1 and 2 is a fixed-wing aircraft having a "tube and wing" configuration. However, the inventive aspects of the present disclosure may apply to other aircraft configurations as well. Further, the inventive aspects of the present disclosure apply to both manned and unmanned aircraft, or Unmanned Aerial Vehicles (UAVs). For reference, the aircraft 100 defines a longitudinal direction L1 and a lateral direction L2 extending perpendicular to the longitudinal direction L1.
The aircraft 100 also defines a lateral centerline LC that extends along the longitudinal direction L1 and separates the aircraft 100 into halves or a first side and a second side.

As shown, the aircraft 100 extends between a first end 110 and a second end 112, e.g., along the longitudinal direction L1. The first end 110 is a forward end of the aircraft 100 and the second end 112 is a rear or aft end of the aircraft 100 for this embodiment. As noted above, the lateral centerline LC separates the aircraft 100 into halves along the lateral direction L2, or stated another way, into a first side 114 and a second side 116. For instance, with reference specifically to FIG. 1, the first side 114 of the aircraft 100 encompasses everything to the left of the lateral centerline LC and the second side 116 of the aircraft 100 encompasses everything to the right of the lateral centerline LC. Accordingly, the aircraft 100 can define a lateral centerline plane LP that extends through the lateral centerline LC in a plane orthogonal to the lateral direction L2 as represented by the dash-dot line in FIG. 1. The first side 114 of the aircraft 100 encompasses everything to the left of the lateral centerline plane LP and the second side 116 of the aircraft 100 encompasses everything to the right of the lateral centerline plane LP.

For this embodiment, the aircraft 100 includes a fuselage 118 having a starboard side 120 and a port side 122. The aircraft 100 also includes a pair of wings 130, 140 each extending laterally outward from the fuselage 118. Particularly, a first wing 130 extends outward from the starboard side 120 of the fuselage 118, e.g., along the lateral direction L2. The first wing 130 spans between a wing root 132 and a wing tip 134. A spanwise length of the first wing 130 extends between the wing root 132 and the wing tip 134. The first wing 130 also has a leading edge 136 and a trailing edge 138. A chordwise length of the first wing 130 extends between the leading edge 136 and the trailing edge 138. A second wing 140 extends outward from the port side 122 of the fuselage 118 opposite the first wing 130. The second wing 140 spans between a wing root 142 and a wing tip 144. A spanwise length of the second wing 140 extends between the wing root 142 and the wing tip 144. The second wing 140 also has a leading edge 146 and a trailing edge 148. A chordwise length of the second wing 140 extends between the leading edge 146 and the trailing edge 148. The aircraft 100 can also include various control surfaces for controlling the aircraft during flight. Example control surfaces include elevators, rudders, ailerons, spoilers, flaps, slats, air brakes, or trim devices, etc. Various actuators, servo motors, and other devices may be used to manipulate the various control surfaces and variable geometry components of the aircraft 100.

The aircraft 100 further includes the distributed unducted fan propulsion system 150. The distributed unducted fan propulsion system 150 is operable to produce thrust for the aircraft 100. As depicted, the distributed unducted fan propulsion system 150 includes a plurality of unducted fans. The unducted fans can be any suitable type of unducted fan propulsor, including, without limitation, propellers, open rotor fans, etc. For this embodiment, the distributed unducted fan propulsion system 150 includes a first set 160 of one or more unducted fans mounted to the first wing 130 as well as a second set 170 of one or more unducted fans distributed along and mounted to the second wing 140. Specifically, for this embodiment, the first set 160 includes a plurality of unducted fans 162A, 162B, 162C distributed spanwise along the first wing 130 and the second set 170 includes a plurality of unducted fans 172A, 172B, 172C distributed spanwise along the second wing 140. The unducted fans 162A, 162B, 162C of the first set 160 each include a plurality of fan blades 164A, 164B, 164C rotatable about their respective axes of rotation and the unducted fans 172A, 172B, 172C of the second set 170 each include a plurality of fan blades 174A, 174B, 174C rotatable about their respective axes of rotation. While the first set 160 and the second set 170 of unducted fans are shown having three unducted fans each, it will be appreciated that in other embodiments that the aircraft 100 can have more or less than three unducted fans mounted to and distributed along its wings 130, 140.

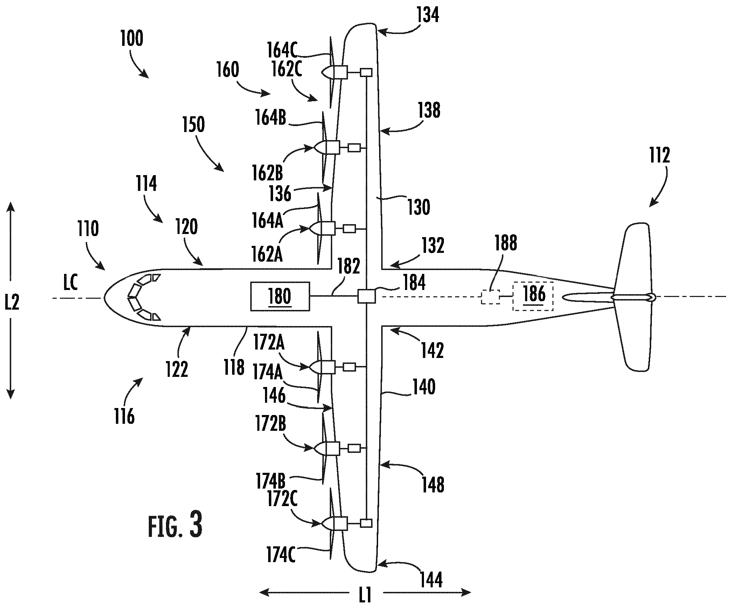

For this embodiment, the fan blades 164A, 164B, 164C of the unducted fans 162A, 162B, 162C of the first set 160 are each positioned aft of the trailing edge 138 of the first wing 130 and the fan blades 174A, 174B, 174C of the unducted fans 172A, 172B, 172C of the second set 170 are each positioned aft of the trailing edge 148 of the second wing 140. In other embodiments, as shown in FIG. 3, the fan blades 164A, 164B, 164C of the unducted fans 162A, 162B, 162C of the first set 160 are each positioned forward of the leading edge 136 of the first wing 130 and the fan blades 174A, 174B, 174C of the unducted fans 172A, 172B, 172C of the second set 170 are each positioned forward of the leading edge 146 of the second wing 140. In such embodiments, the unducted fans 162A, 162B, 162C can be propeller assemblies, for example. In yet other embodiments, at least one of the fan blades 164A, 164B, 164C of the unducted fans 162A, 162B, 162C of the first set 160 is positioned forward of the leading edge 136 of the first wing 130 and at least one of the fan blades 164A, 164B, 164C of the unducted fans 162A, 162B, 162C of the first set 160 is positioned aft of the trailing edge 138 of the first wing 130 and/or at least one of the fan blades 174A, 174B, 174C of the unducted fans 172A, 172B, 172C of the second set 170 is positioned forward of the leading edge 146 of the second wing 140 and at least one of the fan blades 174A, 174B, 174C of the unducted fans 172A, 172B, 172C of the second set 170 is positioned aft of the trailing edge 148 of the second wing 140.

Returning to FIGS. 1 and 2, in some embodiments, the plurality of unducted fans 162A, 162B, 162C of the first set 160 can be evenly distributed spanwise along the first wing 130 and/or the plurality of unducted fans 172A, 172B, 172C of the second set 170 can be evenly distributed spanwise along the second wing 140. In alternative examples, the plurality of unducted fans 162A, 162B, 162C of the first set 160 can be unevenly distributed spanwise along the first wing 130 and the plurality of unducted fans 172A, 172B, 172C of the second set 170 can be unevenly distributed spanwise along the second wing 140.

Further, at least one of the plurality of unducted fans 162A, 162B, 162C of the first set 160 is positioned further toward the wing root 132 than the wing tip 134 of the first wing 130 and at least one of the plurality of unducted fans 162A, 162B, 162C of the first set 160 is positioned further toward the wing tip 134 than the wing root 132 of the first wing 130. For instance, as shown best in FIG. 2, the first wing 130 can define a first wing lateral centerline LC1. The unducted fans 162A and 162B of the first set 160 are positioned further toward the wing root 132 than the wing tip 134 of the first wing 130 as they are on the wing root side of the first wing lateral centerline LC1. The unducted fan 162C of the first set 160 is positioned further toward the wing tip 134 than the wing root 132 of the first wing 130 as it is on the wing tip side of the first wing lateral centerline LC1.

In a similar manner, at least one of the plurality of unducted fans 172A, 172B, 172C of the second set 170 is positioned further toward the wing root 142 than the wing tip 144 of the second wing 140 and at least one of the plurality of unducted fans 172A, 172B, 172C of the second set 170 is positioned further toward the wing tip 144 than the wing root 142 of the second wing 140. For instance, as shown best in FIG. 2, the second wing 140 can define a second wing lateral centerline LC2. The unducted fans 172A and 172B of the second set 170 are positioned further toward the wing root 142 than the wing tip 144 of the second wing 140 as they are on the wing root side of the second wing lateral centerline LC2. The unducted fan 172C of the second set 170 is positioned further toward the wing tip 144 than the wing root 142 of the second wing 140 as it is on the wing tip side of the second wing lateral centerline LC2. Such a distribution of the unducted fans 162A, 162B, 162C along the span of the first wing 130 and the unducted fans 172A, 172B, 172C along the span of the second wing 140 can facilitate better control over the lateral airflow migration over the wings as will be explained further below.

As further shown in FIGS. 1 and 2, the distributed unducted fan propulsion system 150 includes at least one fan drive unit operatively coupled thereto for driving the fan blades 164A, 164B, 164C of the unducted fans 162A, 162B, 162C of the first set 160 and the fan blades 174A, 174B, 174C of the unducted fans 172A, 172B, 172C of the second set 170. In some embodiments, the distributed unducted fan propulsion system 150 can include a single fan drive unit for driving the fan blades 164A, 164B, 164C of the unducted fans 162A, 162B, 162C of the first set 160 and the fan blades 174A, 174B, 174C of the unducted fans 172A, 172B, 172C of the second set 170. The fan drive unit can be an electric machine operable in a drive mode for driving the unducted fans 162A, 162B, 162C, 172A, 172B, 172C, for example. In some other embodiments, the distributed unducted fan propulsion system 150 can include a first fan drive unit for driving the fan blades 164A, 164B, 164C of the unducted fans 162A, 162B, 162C of the first set 160 and a second fan drive unit for driving the fan blades 174A, 174B, 174C of the unducted fans 172A, 172B, 172C of the second set 170. The first and second fan drive units can both be electric machines operable in a drive mode for driving the unducted fans 162A, 162B, 162C, 172A, 172B, 172C.

For this embodiment, the unducted fans 162A, 162B, 162C of the first set 160 and the unducted fans 172A, 172B, 172C of the second set 170 each have a dedicated fan drive unit operatively coupled thereto. Specifically, the unducted fans 162A, 162B, 162C of the first set 160 each have an associated fan drive unit 166A, 166B, 166C and the unducted fans 172A, 172B, 172C of the second set 170 each have an associated fan drive unit 176A, 176B, 176C. The fan drive units 166A, 166B, 166C are operable to drive the fan blades 164A, 164B, 164C of their respective unducted fans 162A, 162B, 162C and the fan drive units 176A, 176B, 176C are operable to drive the fan blades 174A, 174B, 174C of their respective unducted fans 172A, 172B, 172C. In such embodiments, at least one of the fan drive units 166A, 166B, 166C, 176A, 176B, 176C associated with the unducted fans 162A, 162B, 162C of the first set 160 and/or the second set 170 is an electric machine operable in a drive mode for driving its associated unducted fan. For this embodiment, each drive fan drive unit 166A, 166B, 166C, 176A, 176B, 176C is an electric machine operable in a drive mode for driving its associated unducted fan. The electric machines can be electric motors or combination motor/generators, for example. The distributed unducted fan propulsion system 150 can have other suitable configurations and number of fan drive units in other example embodiments.

For this embodiment, the distributed unducted fan propulsion system 150 of the aircraft 100 is an electric distributed unducted fan propulsion system and includes one or more electrical power sources, power conditioning devices, transmission lines, etc. for providing electrical power to the fan drive units 166A, 166B, 166C, 176A, 176B, 176C. For instance, as shown best in FIG. 2, the aircraft 100 includes an electrical power source 180. The electrical power source 180 can be one or more energy storage devices, for example. The one or more energy storage devices can include one or more batteries, battery packs, super capacitors, etc. The electrical power source 180 can be mounted within the fuselage 118 or in another suitable location. Electrical power can be transmitted from the electrical power source 180 to various electrical power-consuming loads, such as the fan drive units 166A, 166B, 166C, 176A, 176B, 176C embodied as electric motors. A power bus 182 can carry the electrical power from the electrical power source 180 to the power-consuming loads. The power bus 182 can include one or more transmission lines or cables, switches, as well as other electrical components.

A plurality of power conditioning devices can be positioned along the power bus 182. For instance, for this embodiment, a first power converter 184 can be positioned along the power bus 182. The first power converter 184 can be a DC-DC power converter operable to change a voltage of the electrical power provided by the electrical power source 180. The electrical power conditioned by the first power converter 184 can be provided as Direct Current (DC) along the power bus 182 to a plurality of converters. For this embodiment, each fan drive unit 166A, 166B, 166C, 176A, 176B, 176C has an associated power converter 168A, 168B, 168C, 178A, 178B, 178C. The power converters 168A, 168B, 168C, 178A, 178B, 178C can convert the incoming DC current to Alternating Current (AC). Accordingly, the power converters 168A, 168B, 168C, 178A, 178B, 178C can be DC-AC power converters. The AC current can be provided to the fan drive units 166A, 166B, 166C, 176A, 176B, 176C embodied as electric motors. It will be appreciated that the configuration of the electric distributed unducted fan propulsion system provided in FIG. 2 is provided by way of example and is not intended to be limiting. Other suitable configurations for providing electrical power to the fan drive units 166A, 166B, 166C, 176A, 176B, 176C are possible.

In some embodiments, the distributed unducted fan propulsion system 150 of the aircraft 100 can be a hybrid electric distributed unducted fan propulsion system. In such embodiments, for example, the distributed unducted fan propulsion system 150 can include a mechanical power source, such as a gas turbine engine 186. The gas turbine engine 186 can be operatively coupled with an electric machine 188. The electric machine 188 is operable in a generating mode. In this manner, the electric machine 188 can output electrical power. The electrical power output by the electric machine 188 can be provided to the electrical power source 180 and/or to the fan drive units 166A, 166B, 166C, 176A, 176B, 176C for driving their respective unducted fans 162A, 162B, 162C, 172A, 172B, 172C.

Notably, in accordance with the inventive aspects of the present disclosure, the unducted fans 162A, 162B, 162C of the first set 160 are rotatable in a first direction and the unducted fans 172A, 172B, 172C of the second set 170 are rotatable in a second direction that is opposite the first direction. Stated another way, all the unducted fans on one side of the aircraft 100 are configured to rotate in a first direction and all the unducted fans on the other side of the aircraft 100 are configured to rotate in a second direction that is opposite or counter to the first direction. For instance, the fan drive units 166A, 166B, 166C can drive the fan blades 164A, 164B, 164C of their respective unducted fans 162A, 162B, 162C in a first direction and the fan drive units 176A, 176B, 176C can drive the fan blades 174A, 174B, 174C of their respective unducted fans 172A, 172B, 172C in a second direction that is opposite or counter to the first direction.

By way of example, as shown in FIGS. 1 and 2, the first wing 130 extends outward from the starboard side 120 of the fuselage 118 and the second wing 140 extends outward from the port side 122 of the fuselage 118 as noted above. Not according to the claims, as shown in FIG. 1, the first direction is a counterclockwise direction CCW as viewed from a front view of the aircraft 100 and the second direction is a clockwise direction CW as viewed from the front view of the aircraft 100. Notably, each unducted fan 162A, 162B, 162C of the first set 160 rotates in a counterclockwise direction CCW as viewed from the front of the aircraft 100. Such rotation of the unducted fans 162A, 162B, 162C, or specifically rotation of the fan blades 164A, 164B, 164C thereof, can counter the top lateral flow TF1 that flows spanwise inward from the wing tip 134 to the wing root 132 above the first wing 130 as well as the bottom lateral flow BF1 that flows generally spanwise outward from the underside of the fuselage 118 and wing root 132 to the wing tip 134 below the first wing 130. Moreover, each unducted fan 172A, 172B, 172C of the second set 170 rotates in a clockwise direction CW as viewed from the front of the aircraft 100. Such rotation of the unducted fans 172A, 172B, 172C, or specifically rotation of the fan blades 174A, 174B, 174C thereof, can counter the top lateral flow TF2 that flows spanwise inward from the wing tip 144 to the wing root 142 above the second wing 140 as well as the bottom lateral flow BF2 that flows generally spanwise outward from the underside of the fuselage 118 and wing root 142 to the wing tip 144 below the second wing 140. As will be explained further below, such a counterrotation scheme can provide a number of advantages and benefits. For instance, counterrotation of the distributed array of unducted fans can provide improved control over the lateral airflow migration, among other benefits.

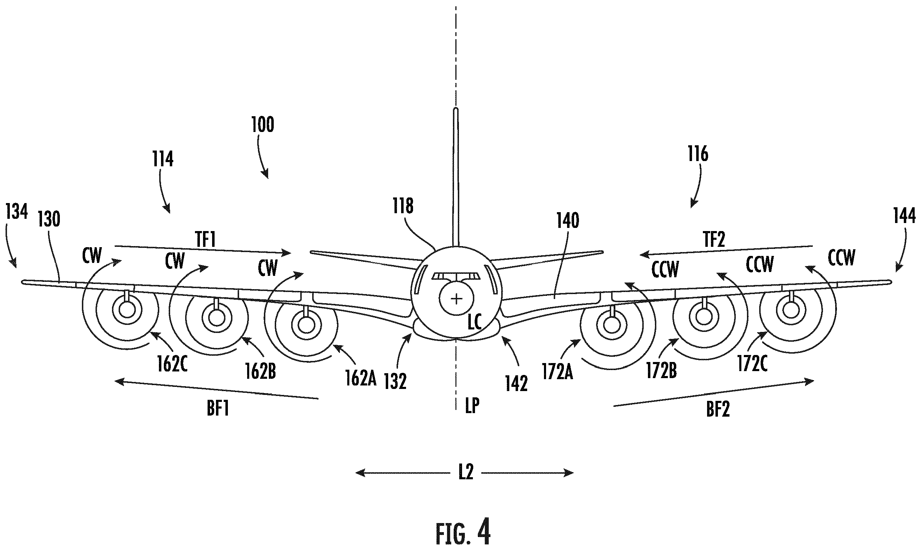

According to the claims, the first direction is a clockwise direction as viewed from a front view of the aircraft 100 and the second direction is a counterclockwise direction as viewed from the front view of the aircraft 100. According to the claims, with reference to FIG. 4, the first direction is a clockwise direction CW as viewed from a front view of the aircraft 100 and the second direction is a counterclockwise direction CCW as viewed from the front view of the aircraft 100. As shown, each unducted fan 162A, 162B, 162C of the first set 160 rotates in a clockwise direction CW as viewed from the front of the aircraft 100. Such rotation of the unducted fans 162A, 162B, 162C, or specifically rotation of the fan blades 164A, 164B, 164C thereof, can accelerate the top lateral flow TF1 that flows spanwise inward from the wing tip 134 to the wing root 132 above the first wing 130 as well as the bottom lateral flow BF1 that flows generally spanwise outward from the underside of the fuselage 118 and wing root 132 to the wing tip 134 below the first wing 130. Moreover, each unducted fan 172A, 172B, 172C of the second set 170 rotates in a counterclockwise direction CCW as viewed from the front of the aircraft 100. Such rotation of the unducted fans 172A, 172B, 172C, or specifically rotation of the fan blades 174A, 174B, 174C thereof, can accelerate the top lateral flow TF2 that flows spanwise inward from the wing tip 144 to the wing root 142 above the second wing 140 as well as the bottom lateral flow BF2 that flows generally spanwise outward from the underside of the fuselage 118 and wing root 142 to the wing tip 144 below the second wing 140. While such a counterrotation scheme causes the lateral airflow to be accelerated, it may still provide control of the over the lateral airflow migration, among other benefits.

The counterrotation schemes noted above can provide a number of advantages and benefits. For instance, counterrotation of the distributed array of unducted fans can provide improved control over the lateral airflow migration. Particularly, such counterrotation schemes can allow for the unducted fans to straighten the laterally moving airflow such that the mixing losses in the wing wake are reduced. This can reduce or nearly eliminate the drag resulting from the lateral airflow migration. Accordingly, reduced losses and synergies can be achieved. This is beneficial in that various components that have conventionally been added to the wings to account for such lateral airflow migrations can be eliminated, such as fan Inlet Guide Vanes (IGVs) and other airfoils positioned along the wings.

In addition, particularly for electric motor driven unducted fans, there is a minimal or no penalty for having electric motors rotating one way on one side of the aircraft and another way on the other side. Thus, electric motors are particularly beneficial in that they are not "handedness" dependent like other types of drive units, such as gas turbine engines. Electric motors are typically configured to rotate in a first direction or in an opposite second direction. Thus, the same model of electric motor can be positioned on both sides of the aircraft unlike handedness dependent fan drive units.

Furthermore, notably, the greater the number of unducted fans distributed along a wing, the greater the control of the lateral airflow migration. In some embodiments, at least three unducted fans are positioned on each side of the aircraft, e.g., as shown in the embodiment of FIGS. 1 and 2, FIG. 3, and FIG. 4. In such embodiments where at least three unducted fans are positioned on each side of the aircraft, the lateral airflow migration can be particularly controlled where at least one unducted fan is positioned further toward the wing root than the wing tip of a first wing and at least one unducted fan is positioned further toward the wing tip than the wing root of the first wing, and similarly, where at least one unducted fan is positioned further toward the wing root than the wing tip of the second wing that extends opposite the first wing and at least one unducted fan is positioned further toward the wing tip than the wing root of the second wing.

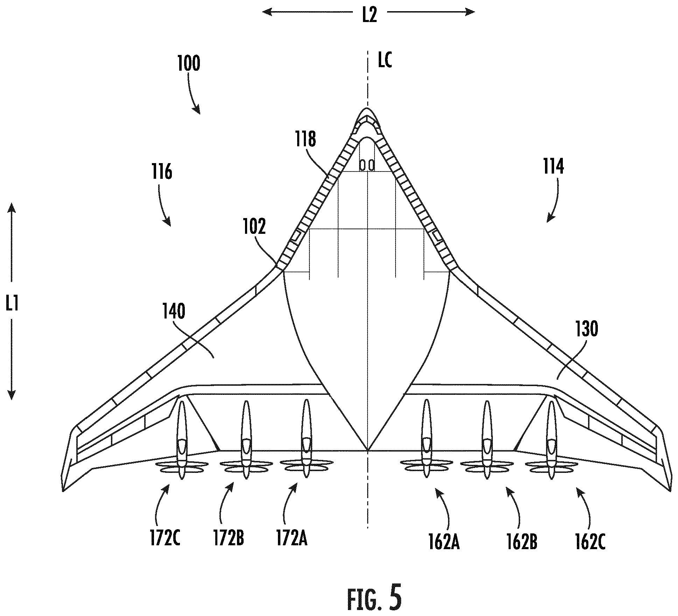

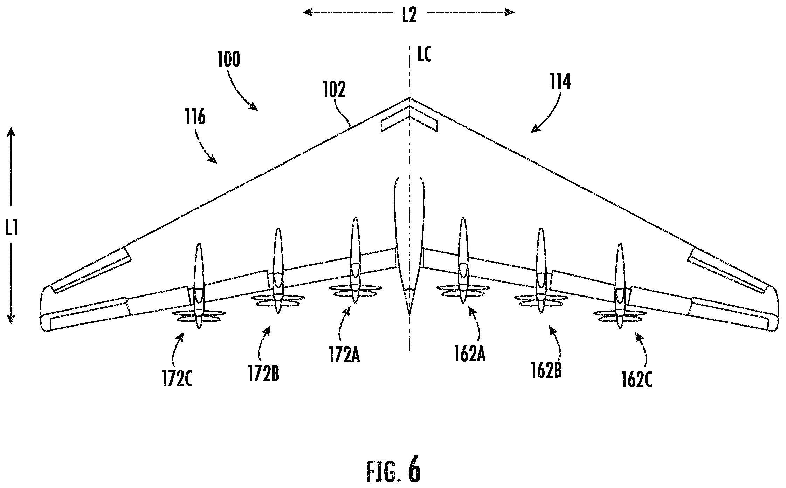

Notably, the inventive aspects of the present disclosure can apply to a number of different aircraft configurations in addition to "tube and wing" configurations. The aircraft 100 of the embodiment of FIGS. 1 and 2, the embodiment of FIG. 3, and the embodiment of FIG. 4 all have tube and wing configurations. For instance, in some embodiments, the inventive aspects of the present disclosure can apply to aircraft having a blended wing configuration. In a blended wing configuration, the aircraft has no discernable or definite difference between the wings and the main body or fuselage of the aircraft. FIG. 5 provides a schematic top plan view of an aircraft 100 having a blended wing configuration. In other embodiments, the inventive aspects of the present disclosure can apply to aircraft having a flying wing configuration. In a flying wing configuration, the aircraft has no discernable or definite fuselage and is tailless. FIG. 6 provides a schematic top plan view of an aircraft 100 having a flying wing configuration.

The aircraft 100 of FIG. 5 has a body 102 defining a lateral centerline LC that separates the body 102 into a first side 114 and a second side 116. The body 102 includes the fuselage 118 and wings 130, 140 blended into the fuselage 118. Notably, one or more first unducted fans 162A, 162B, 162C are mounted to the first side 114 of the body 102. For this embodiment, the first unducted fans 162A, 162B, 162C are mounted to the first wing 130. The first unducted fans 162A, 162B, 162C are rotatable in a first direction. The first unducted fans 162A, 162B, 162C can be electrically-driven unducted fans. For example, one or more electric motors can drive the first unducted fans 162A, 162B, 162C about the first direction. According to the claims, the first direction is a clockwise direction when viewed from a front view of the aircraft 100. Not according to the claims, the first direction is a counterclockwise direction when viewed from a front view of the aircraft 100.

As further shown in FIG. 5, one or more second unducted fans 172A, 172B, 172C are mounted to the second side 116 of the body 102. For this embodiment, the second unducted fans 172A, 172B, 172C are mounted to the second wing 140. The second unducted fans 172A, 172B, 172C are rotatable in a second direction that is opposite the first direction. The second unducted fans 172A, 172B, 172C can be electrically-driven unducted fans. For example, one or more electric motors can drive the second unducted fans 172A, 172B, 172C about the second direction. Not according to the claims, the second direction is a clockwise direction when viewed from a front view of the aircraft 100. According to the claims, the second direction is a counterclockwise direction when viewed from a front view of the aircraft 100. The advantageous and benefits noted above with respect to the aircraft having the tube and wing configurations apply equally to aircraft having blended wing configurations, such as the example aircraft 100 of FIG. 5.

The aircraft 100 of FIG. 6 has a body 102 defining a lateral centerline LC that separates the body 102 into a first side 114 and a second side 116. The body 102 has no discernable or definite fuselage and is tailless. Notably, one or more first unducted fans 162A, 162B, 162C are mounted to the first side 114 of the body 102. The first unducted fans 162A, 162B, 162C are rotatable in a first direction. The first unducted fans 162A, 162B, 162C can be electrically-driven unducted fans. For example, one or more electric motors can drive the first unducted fans 162A, 162B, 162C about the first direction. According to the claims, the first direction is a clockwise direction when viewed from a front view of the aircraft 100. Not according to the claims, the first direction is a counterclockwise direction when viewed from a front view of the aircraft 100.

As further shown in FIG. 5, one or more second unducted fans 172A, 172B, 172C are mounted to the second side 116 of the body 102. For this embodiment, the second unducted fans 172A, 172B, 172C are mounted to the second wing 140. The second unducted fans 172A, 172B, 172C are rotatable in a second direction that is opposite the first direction. The second unducted fans 172A, 172B, 172C can be electrically-driven unducted fans. For example, one or more electric motors can drive the second unducted fans 172A, 172B, 172C about the second direction. Not according to the claims, the second direction is a clockwise direction when viewed from a front view of the aircraft 100. According to the claims, the second direction is a counterclockwise direction when viewed from a front view of the aircraft 100. The advantageous and benefits noted above with respect to the aircraft having the tube and wing configurations apply equally to aircraft having flying wing configurations, such as the example aircraft 100 of FIG. 6.

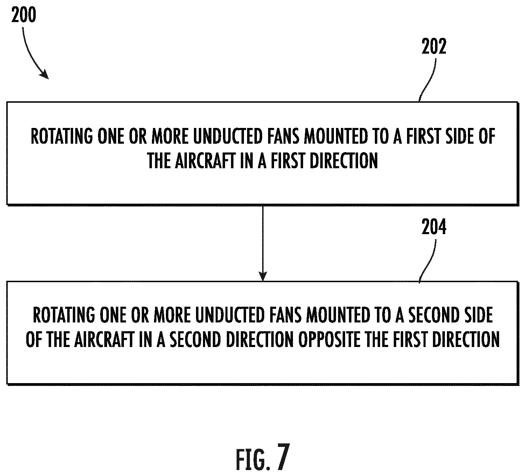

FIG. 7 provides a method (200) of operating an aircraft according to an example aspect of the present disclosure. Any suitable type of aircraft can be operated in accordance with method (200). For instance, the aircraft can be any of the aircraft shown in FIGS. 1 through 6. In this regard, aircraft having a tube and wing configuration, aircraft having a blended wing configuration, aircraft having a flying wing configuration, as well as other aircraft having other configurations can be operated in accordance with method (200). For reference, the aircraft operated in accordance with method (200) can define a lateral centerline that separates the aircraft into a first side and a second side. The aircraft can extend along a longitudinal direction, e.g., from a leading end to a trailing end. The aircraft can extend laterally along a lateral direction that is perpendicular to longitudinal direction. The lateral centerline can separate or divide the aircraft lateral halves.

At (202), the method (200) includes rotating one or more unducted fans mounted to the first side of the aircraft in a first direction. For instance, not according to the claims, the first direction is a counterclockwise direction. By way of example, as shown in FIG. 1, the unducted fans 162A, 162B, 162C are shown mounted to the first side 114 of the aircraft 100 and rotating in a counterclockwise direction CCW. According to the claims, the first direction is a clockwise direction.
By way of example, as shown in FIG. 4, the unducted fans 162A, 162B, 162C are shown mounted to the first side 114 of the aircraft 100 and rotating in a clockwise direction CW. The unducted fans can be rotated about the first direction by one or more fan drive units, such as one or more electric motors. In this regard, the unducted fans mounted to the first side of the aircraft can be electrically-driven unducted fans.

At (204), with reference again to FIG. 7, the method (200) includes rotating one or more unducted fans mounted to the second side of the aircraft in a second direction opposite the first direction. For instance, not according to the claims, the second direction is a clockwise direction. By way of example, as shown in FIG. 1, the unducted fans 172A, 172B, 172C are shown mounted to the second side 116 of the aircraft 100 and rotating in a clockwise direction CW, which is a direction opposite or counter to the counterclockwise rotating unducted fans 162A, 162B, 162C mounted to the first side 114 of the aircraft 100. In this manner, the unducted fans 162A, 162B, 162C mounted to the first side 114 of the aircraft 100 all rotate the same direction (e.g., a counterclockwise direction) and the unducted fans 172A, 172B, 172C mounted to the second side 116 of the aircraft 100 all rotate the same direction (e.g., a clockwise direction) and opposite the direction of the unducted fans 162A, 162B, 162C mounted to the first side 114 of the aircraft 100. As explained above, this counterrotation scheme can provide improved control over the lateral airflow migration, and consequently, drag resulting from such a lateral airflow migration can be mitigated or eliminated and conventional components that address lateral airflow migration can be removed or used to a lesser extent, among other benefits and advantages.

According to the claims, the second direction is a counterclockwise direction. By way of example, as shown in FIG. 4, the unducted fans 172A, 172B, 172C are shown mounted to the second side 116 of the aircraft 100 and rotating in a counterclockwise direction CCW, which is a direction opposite or counter to the clockwise rotating unducted fans 162A, 162B, 162C mounted to the first side 114 of the aircraft 100. In this manner, the unducted fans 162A, 162B, 162C mounted to the first side 114 of the aircraft 100 all rotate the same direction (e.g., a clockwise direction) and the unducted fans 172A, 172B, 172C mounted to the second side 116 of the aircraft 100 all rotate the same direction (e.g., a counterclockwise direction) and opposite the direction of the unducted fans 162A, 162B, 162C mounted to the first side 114 of the aircraft 100.

Although specific features of various embodiments may be shown in some drawings and not in others, this is for convenience only. In accordance with the principles of the present disclosure, any feature of a drawing may be referenced and/or claimed in combination with any feature of any other drawing.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art.

## Claims

1. An aircraft (100), comprising:
a fuselage (118);
a first wing (130) extending outward from a starboard side of the fuselage (118);
a second wing (140) extending outward from a port side of the fuselage (118) opposite the first wing (130);
a first set (160) of one or more unducted fans (162A-C) mounted to the first wing (130), the one or more first unducted fans (162A-C) of the first set (160) being rotatable in a first direction so as to accelerate a top lateral flow (TF1) that flows spanwise inward from a wing tip (134) to a wing root (132) above the first wing (130) as well as a bottom lateral flow (BF1) that flows generally spanwise outward from an underside of the fuselage (118) and the wing root (132) to the wing tip (134) below the first wing (130); and
a second set (170) of one or more unducted fans (172A-C) mounted to the second wing (140), the one or more unducted fans (172A-C) of the second set (170) being rotatable in a second direction that is opposite the first direction so as to accelerate a top lateral flow (TF2) that flows spanwise inward from a wing tip (144) to a wing root (142) above the second wing (140) as well as a bottom lateral flow (BF2) that flows generally spanwise outward from an underside of the fuselage (118) and the wing root (142) to the wing tip (144) below the second wing (140);
wherein the first direction is a clockwise direction when viewed from a front view of the aircraft (100) and the second direction is a counterclockwise direction when viewed from the front view of the aircraft (100);
wherein the first wing (130) only mounts fans that are rotatable in the first direction and the second wing (140) only mounts fans that are rotatable in the second direction;
wherein the first set (160) of the one or more fans includes a plurality of fans and the second set (170) of the one or more fans includes a plurality of fans, and wherein at least one of the plurality of fans of the first set (160) is positioned further toward a wing root (132) than a wing tip (134) of the first wing (130) and at least one of the plurality of fans of the first set (160) is positioned further toward the wing tip (134) than the wing root (132); and
wherein at least one of the plurality of fans of the second set (170) is positioned further toward a wing root (132) than a wing tip (134) of the second wing (140) and at least one of the plurality of fans of the second set (170) is positioned further toward the wing tip (134) than the wing root (132) of the second wing (140).

2. The aircraft (100) of claim 1, wherein the one or more fans of the first set (160) each has fan blades (164A) that are positioned aft of a trailing edge (138) of the first wing (130) and the one or more fans of the second set (170) each has fan blades (164A) that are positioned aft of a trailing edge (138) of the second wing (140).

3. The aircraft (100) of claim 1, wherein the one or more fans of the first set (160) each has fan blades (164A) that are positioned forward of a leading edge (136) of the first wing (130) and the one or more fans of the second set (170) each has fan blades (164A) that are positioned forward of a leading edge (136) of the second wing (140).

4. The aircraft (100) of any preceding claim, wherein the first set (160) of the one or more fans includes at least three fans distributed along the first wing (130) and the second set (170) of the one or more fans includes at least three fans distributed along the second wing (140).

5. The aircraft (100) of any preceding claim, wherein the one or more fans of the first set (160) and the second set (170) each has fan blades (164A) and a fan drive unit (166A) operatively coupled thereto for driving the fan blades (164A) about the first direction and the second direction, respectively.

6. The aircraft (100) of claim 5, wherein the fan drive units (166A) of the one or more fans of the first set (160) and the second set (170) are electric motors.

7. The aircraft (100) of any preceding claim, wherein the plurality of fans of the first set (160) are evenly distributed spanwise along the first wing (130) and the plurality of fans of the second set (170) are evenly distributed spanwise along the second wing (140).

8. A method (200) of operating an aircraft (100) according to claim 1, the method (200) comprising:
rotating the first set (160) of one or more unducted fans (162A-C) in the first direction; and
rotating the second set (170) of one or more unducted fans (172A-C) in the second direction.

## Patentansprüche

1. Luftfahrzeug (100), umfassend:
einen Rumpf (118);
eine erste Tragfläche (130), die sich von einer Steuerbordseite des Rumpfs (118) nach außen erstreckt;
eine zweite Tragfläche (140), die sich von einer Backbordseite des Rumpfs (118) entgegengesetzt zu der ersten Tragfläche (130) nach außen erstreckt;
einen ersten Satz (160) eines oder mehrerer Open-Rotor-Triebwerke (162A-C), der an der ersten Tragfläche (130) montiert ist, wobei das eine oder die mehreren ersten Open-Rotor-Triebwerke (162A-C) des ersten Satzes (160) in einer ersten Richtung drehbar sind, um einen oberen Quertrieb (TF1), der spannweitig nach innen von einem Tragflächenende (134) zu einem Rumpf-Flächenübergang (132) über der ersten Tragfläche (130) strömt, sowie einen unteren Quertrieb (BF1), der allgemein spannweitig nach außen von einer Unterseite des Rumpfs (118) und dem Rumpf-Flächenübergang (132) zu dem Tragflächenende (134) unter der ersten Tragfläche (130) strömt, zu beschleunigen; und
einen zweiten Satz (170) eines oder mehrerer Open-Rotor-Triebwerke (172A-C), der an der zweiten Tragfläche (140) montiert ist, wobei das eine oder die mehreren Open-Rotor-Triebwerke (172A-C) des zweiten Satzes (170) in einer zweiten Richtung drehbar sind, die entgegengesetzt zu der ersten Richtung ist, um einen oberen Quertrieb (TF2), der spannweitig nach innen von einem Tragflächenende (144) zu einem Rumpf-Flächenübergang (142) über der zweiten Tragfläche (140) strömt, sowie einen unteren Quertrieb (BF2), der allgemein spannweitig nach außen von einer Unterseite des Rumpfs (118) und dem Rumpf-Flächenübergang (142) zu dem Tragflächenende (144) unter der zweiten Tragfläche (140) strömt, zu beschleunigen;
wobei die erste Richtung bei Betrachtung von einer Vorderansicht des Luftfahrzeugs (100) eine Richtung im Uhrzeigersinn ist und die zweite Richtung bei Betrachtung von der Vorderansicht des Luftfahrzeugs (100) eine Richtung entgegen dem Uhrzeigersinn ist;
wobei die erste Tragfläche (130) nur Triebwerke fasst, die in der ersten Richtung drehbar sind, und die zweite Tragfläche (140) nur Triebwerke fasst, die in der zweiten Richtung drehbar sind;
wobei der erste Satz (160) des einen oder der mehreren Triebwerke eine Vielzahl von Triebwerken einschließt und der zweite Satz (170) des einen oder der mehreren Triebwerke eine Vielzahl von Triebwerken einschließt, und wobei mindestens eines der Vielzahl von Triebwerken des ersten Satzes (160) weiter zu einem Rumpf-Flächenübergang (132) als einem Tragflächenende (134) der ersten Tragfläche (130) hin positioniert ist und mindestens eines der Vielzahl von Triebwerken des ersten Satzes (160) weiter zu dem Tragflächenende (134) als dem Rumpf-Flächenübergang (132) hin positioniert ist; und
wobei mindestens eines der Vielzahl von Triebwerken des zweiten Satzes (170) weiter zu einem Rumpf-Flächenübergang (132) als einem Tragflächenende (134) der zweiten Tragfläche (140) hin positioniert ist und mindestens eines der Vielzahl von Triebwerken des zweiten Satzes (170) weiter zu dem Tragflächenende (134) als dem Rumpf-Flächenübergang (132) der zweiten Tragfläche (140) hin positioniert ist.

2. Luftfahrzeug (100) nach Anspruch 1, wobei das eine oder die mehreren Triebwerke des ersten Satzes (160) jeweils Triebwerksschaufeln (164A) aufweisen, die heckwärts von einer Hinterkante (138) der ersten Tragfläche (130) positioniert sind, und das eine oder die mehreren Triebwerke des zweiten Satzes (170) jeweils Triebwerksschaufeln (164A) aufweisen, die heckwärts von einer Hinterkante (138) der zweiten Tragfläche (140) positioniert sind.

3. Luftfahrzeug (100) nach Anspruch 1, wobei das eine oder die mehreren Triebwerke des ersten Satzes (160) jeweils Triebwerksschaufeln (164A) aufweisen, die vorwärts von einer Vorderkante (136) der ersten Tragfläche (130) positioniert sind, und das eine oder die mehreren Triebwerke des zweiten Satzes (170)jeweils Triebwerksschaufeln (164A) aufweisen, die vorwärts von einer Vorderkante (136) der zweiten Tragfläche (140) positioniert sind.

4. Luftfahrzeug (100) nach einem vorhergehenden Anspruch, wobei der erste Satz (160) des einen oder der mehreren Triebwerke mindestens drei Triebwerke einschließt, die entlang der ersten Tragfläche (130) verteilt sind, und der zweite Satz (170) des einen oder der mehreren Triebwerke mindestens drei Triebwerke einschließt, die entlang der zweiten Tragfläche (140) verteilt sind.

5. Luftfahrzeug (100) nach einem vorhergehenden Anspruch, wobei das eine oder die mehreren Triebwerke des ersten Satzes (160) und des zweiten Satzes (170) jeweils Triebwerksschaufeln (164A) und eine Triebwerkantriebseinheit (166A) aufweisen, die zum Antreiben der Triebwerksschaufeln (164A) um die erste Richtung bzw. die zweite Richtung funktionsfähig daran gekoppelt ist.

6. Luftfahrzeug (100) nach Anspruch 5, wobei die Triebwerksantriebseinheiten (166A) des einen oder der mehreren Triebwerke des ersten Satzes (160) und des zweiten Satzes (170) Elektromotoren sind.

7. Luftfahrzeug (100) nach einem vorhergehenden Anspruch, wobei die Vielzahl von Triebwerken des ersten Satzes (160) spannweitig entlang der ersten Tragfläche (130) gleichmäßig verteilt sind und die Vielzahl von Triebwerken des zweiten Satzes (170) spannweitig entlang der zweiten Tragfläche (140) gleichmäßig verteilt sind.

8. Verfahren (200) zum Betreiben eines Luftfahrzeugs (100) nach Anspruch 1, wobei das Verfahren (200) umfasst:
Drehen des ersten Satzes (160) eines oder mehrerer Open-Rotor-Triebwerke (162A-C) in der ersten Richtung; und
Drehen des zweiten Satzes (170) eines oder mehrerer Open-Rotor-Triebwerke (172A-C) in der zweiten Richtung.

## Revendications

1. Aéronef (100), comprenant :
un fuselage (118) ;
une première aile (130) s'étendant vers l'extérieur à partir d'un côté tribord du fuselage (118) ;
une deuxième aile (140) s'étendant vers l'extérieur à partir d'un côté bâbord du fuselage (118) opposé à la première aile (130) ;
un premier ensemble (160) d'un ou plusieurs ventilateurs non carénés (162A-C) montés sur la première aile (130), les un ou plusieurs premiers ventilateurs non carénés (162A-C) du premier ensemble (160) étant aptes à tourner dans une première direction de manière à accélérer un écoulement latéral supérieur (TF1) qui s'écoule dans le sens de l'envergure vers l'intérieur depuis une extrémité d'aile (134) vers un pied d'aile (132) au-dessus de la première aile (130), ainsi qu'un écoulement latéral inférieur (BF1) qui s'écoule globalement dans le sens de l'envergure vers l'extérieur depuis un côté inférieur du fuselage (118) et du pied d'aile (132) vers l'extrémité d'aile (134) au-dessous de la première aile (130) ; et
un deuxième ensemble (170) d'un ou plusieurs ventilateurs non carénés (172A-C) montés sur la deuxième aile (140), les un ou plusieurs ventilateurs non carénés (172A-C) du deuxième ensemble (170) étant aptes à tourner dans une deuxième direction qui est opposée à la première direction de manière à accélérer un écoulement latéral supérieur (TF2) qui s'écoule dans le sens de l'envergure vers l'intérieur depuis une extrémité d'aile (144) vers un pied d'aile (142) au-dessus de la deuxième aile (140), ainsi qu'un écoulement latéral inférieur (BF2) qui s'écoule globalement dans le sens de l'envergure vers l'extérieur depuis un côté inférieur du fuselage (118) et du pied d'aile (142) vers l'extrémité d'aile (144) au-dessous de la deuxième aile (140) ;
dans lequel la première direction est une direction horaire lorsqu'elle est observée depuis une vue de face de l'aéronef (100) et la deuxième direction est une direction antihoraire lorsqu'elle est observé depuis la vue de face de l'aéronef (100) ;
dans lequel la première aile (130) ne porte que des ventilateurs aptes à tourner dans la première direction et la deuxième aile (140) ne porte que des ventilateurs aptes à tourner dans la deuxième direction ;
dans lequel le premier ensemble (160) des un ou plusieurs ventilateurs inclut une pluralité de ventilateurs et le deuxième ensemble (170) des un ou plusieurs ventilateurs inclut une pluralité de ventilateurs, et dans lequel au moins un de la pluralité de ventilateurs du premier ensemble (160) est positionné plus près d'un pied d'aile (132) que d'une extrémité d'aile (134) de la première aile (130) et au moins un de la pluralité de ventilateurs du premier ensemble (160) est positionné plus près de l'extrémité d'aile (134) que du pied d'aile (132), et
dans lequel au moins un de la pluralité de ventilateurs du deuxième ensemble (170) est positionné plus près d'un pied d'aile (132) que d'une extrémité d'aile (134) de la deuxième aile (140) et au moins un de la pluralité de ventilateurs du deuxième ensemble (170) est positionné plus près de l'extrémité d'aile (134) que du pied d'aile (132) de la deuxième aile (140).

2. Aéronef (100) selon la revendication 1, dans lequel les un ou plusieurs ventilateurs du premier ensemble (160) comportent chacun des pales de ventilateur (164A) qui sont positionnées en aval d'un bord de fuite (138) de la première aile (130) et les un ou plusieurs ventilateurs du deuxième ensemble (170) comportent chacun des pales de ventilateur (164A) qui sont positionnées en aval d'un bord de fuite (138) de la deuxième aile (140).

3. Aéronef (100) selon la revendication 1, dans lequel les un ou plusieurs ventilateurs du premier ensemble (160) comportent chacun des pales de ventilateur (164A) qui sont positionnées en amont d'un bord d'attaque (136) de la première aile (130) et les un ou plusieurs ventilateurs du deuxième ensemble (170) comportent chacun des pales de ventilateur (164A) qui sont positionnées en amont d'un bord d'attaque (136) de la deuxième aile (140).

4. Aéronef (100) selon l'une quelconque des revendications précédentes, dans lequel le premier ensemble (160) des un ou plusieurs ventilateurs inclut au moins trois ventilateurs répartis le long de la première aile (130) et le deuxième ensemble (170) des un ou plusieurs ventilateurs inclut au moins trois ventilateurs répartis le long de la deuxième aile (140).

5. Aéronef (100) selon l'une quelconque des revendications précédentes, dans lequel les un ou plusieurs ventilateurs du premier ensemble (160) et du deuxième ensemble (170) comportent chacun des pales de ventilateur (164A) et une unité d'entraînement de ventilateur (166A) couplée de manière opérationnelle à celles-ci pour entraîner les pales de ventilateur (164A) respectivement selon la première direction et la deuxième direction.

6. Aéronef (100) selon la revendication 5, dans lequel les unités d'entraînement de ventilateur (166A) des un ou plusieurs ventilateurs du premier ensemble (160) et du deuxième ensemble (170) sont des moteurs électriques.

7. Aéronef (100) selon l'une quelconque des revendications précédentes, dans lequel la pluralité de ventilateurs du premier ensemble (160) est répartie uniformément dans le sens de l'envergure le long de la première aile (130) et la pluralité de ventilateurs du deuxième ensemble (170) est répartie uniformément dans le sens de l'envergure le long de la deuxième aile (140).

8. Procédé (200) pour faire fonctionner un aéronef (100) selon la revendication 1, le procédé (200) comprenant :
la mise en rotation du premier ensemble (160) d'un ou plusieurs ventilateurs non carénés (162A-C) dans la première direction ; et
la mise en rotation du deuxième ensemble (170) d'un ou plusieurs ventilateurs non carénés (172A-C) dans la deuxième direction.
